# EUROPÄISCHE PATENTSCHRIFT

(11) **EP 1 057 531 B1**
(45) Veröffentlichungstag und Bekanntmachung des Hinweises auf die Patenterteilung: **05.03.2003**
(21) Anmeldenummer: 00106518.4
(22) Anmeldetag: 25.03.2000
(51) Int. Cl.: B02C 13/14, B02C 13/284, B29B 17/00, B03B 9/06, B07B 1/20, B07B 1/46

(54) **Vorrichtung zum Verarbeiten von Bauteilen aus Mischstoffen**
Apparatus for treating components made of composite materials
Dispositif pour traiter des éléments de matériaux de mélange

(30) Priorität: 04.06.1999 DE 19925500
(43) Veröffentlichungstag der Anmeldung: 06.12.2000
(73) Patentinhaber: Schäfer Elektrotechnik - Sondermaschinen, 67308 Rüssingen (DE)
(72) Erfinder: Schäfer, Ralf, 67308 Rüssingen (DE)
(74) Vertreter: Fischer, Wolf-Dieter, Dipl.-Ing.

(56) Entgegenhaltungen:
- EP-A- 0 068 502
- EP-A- 0 386 998
- EP-A- 0 534 722
- WO-A-94/00282
- DE-A- 19 616 623
- FR-A- 1 288 196
- GB-A- 2 084 055
- US-A- 4 072 273

## Beschreibung

Die Erfindung betrifft eine Vorrichtung zum Verarbeiten von Bauteilen aus Mischstoffen mit Bestandteilen aus Kunststoff, Metallteile, Glas, Gummi, Holz oder Faserstoffe mit einem Prallreaktor, der einen zylindrischen Mantel aufweist, in dem ein Rotor mit am Umfang angeordneten Prallelementen vorgesehen ist, gemäß dem Oberbegriff von Anspruch 1.

Eine Vorrichtung mit diesen Merkmalen ist bekannt (EP-OS 859 693), bei der zum Verarbeiten zum Bauteilen aus Mischkunststoffen und damit vermischten anderen Baustoffen, wie Metallteilen, Glas, Gummi, Holz oder Faserstoffen ein Prallreaktor verwendet wird und die Bauteile durch eine Prallbeanspruchung zerkleinert werden. Sobald die zu verarbeitenden Bauteile den gewünschten Zustand erreicht haben, wird das Material über eine zu öffnende Materialaustrittsklappe dem Prallreaktor entnommen. Bei dieser bekannten Ausführungsform gibt es somit lediglich zwei Betriebszustände, nämlich bei geschlossener Klappe oder bei geöffneter Klappe. Eine Anpassung an verschiedene Materialgemische und Materialarten ist somit nicht möglich. Ein weiterer wesentlicher Nachteil dieser bekannten Vorrichtung besteht darin, daß der Rotor und damit auch die Prallelemente innerhalb des Reaktorraumes nicht in der Höhe, das heißt im Abstand zum Prallreaktorboden stufenlos verstellt werden können, um so jede gewünschte Anpassung an das Material zu erreichen. Eine Verstellung ist lediglich mit Hilfe von Beilagscheiben möglich, was äußerst aufwendig ist und insbesondere auch zu Stillstandzeiten der Maschine führt.

GB-A-2084055, FR-A-1 288 196, WO-A-94 00282, DE-A-196 16 623, US-A-4 072 273 und EP-A-0 386 998 beschreiben Turbomühlen zum Mahlen von sorgfältig vorsortierten Materialen, die je nach Ausgestaltung der Mühlen im Wesentlichen die gleichen Eigenschaften aufweisen müssen, um eine Beschädigung der Turbomühlen zu vermeiden. Die beschriebenen Turbomühlen, in gleicher Weise wie die in der EP-A-0 534 722 beschriebene Glasmühle, weisen hierbei lediglich eine Auswurföffnung auf, und eignen sich nicht zur gleichzeitigen Zerkleinerung sowie dem gezielten und differenzierten Ausbringen verschiedener Materialarten, insbesondere, wenn diese Gemische aus Metall und weichen Materialen enthalten.

Der Erfindung liegt die Aufgabe zugrunde, eine Vorrichtung der eingangs genannten Art so auszubilden, daß Materialgemische zerkleinert und die verschiedenen Materialarten, die sich in dem Gemisch befinden, differenziert und gezielt ausgebracht werden können.

Diese Aufgabe wird nach der Erfindung durch die Merkmale von Anspruch 1 gelöst.

Es ist vorteilhaft, daß zu einer ersten verschließbaren Auswurföffnung am Umfang des Mantels versetzt eine mit den geschlitzten und/oder gelochten Abdeckblechen abgedeckte weitere Auswurföffnung angeordnet ist.

Eine vorteilhafte Ausführungsform besteht darin, daß die Schlitze und/oder die Lochung zur tangentialen Laufrichtung des Rotors in Laufrichtung, gegen die Laufrichtung und senkrecht zur Laufrichtung angeordnet sind.

Weiterhin ist es vorteilhaft, daß der Abstand der Schlitze und/oder der Löcher vom Prallreaktorboden einstellbar ist.

Es ist vorteilhaft, daß der Rotor in der Höhe stufenlos verstellbar ist.

Weiterhin wird vorgeschlagen, daß der Rotor an seitlichen Gewindespindeln abgestützt ist.

Es ist vorteilhaft, daß sich die geschlitzten und/oder gelochten Abdeckbleche über den Umfang des Mantels erstrecken.

Weiterhin wird vorgeschlagen, daß der die Auswurföffnungen aufweisende Bereich des Mantels von einem Luftabsaugring umgeben ist, der an ein Gebläse angeschlossen ist.

Eine weitere vorteilhafte Ausführungsform sieht vor, daß der Prallreaktorboden im Randbereich eine Vertiefung aufweist und sich im Bereich der Vertiefung eine weitere Auswurföffnung befindet.

Es ist vorteilhaft, daß die Prallkante der Prallelemente in oder entgegen der Tangente zur Laufrichtung ausgerichtet ist.

Weiterhin wird vorgeschlagen, daß eine an der Innenseite des zylindrischen Mantels gegenüber dem Rotor angebrachte Scherleiste mittels Federn oder gesteuertem Hydraulikdruck abgestützt ist.

Vorteilhaft geht man so vor, daß oberhalb und/oder unterhalb der Prallelemente am Mantel Scherleisten angebracht sind.

Nach einem weiteren Vorschlag geht man so vor, daß oberhalb des Mantels ein Einfüllbehälter angeordnet ist, der mit trichterförmigen Einbauten versehen ist.

Schließlich wird vorgeschlagen, daß an den Einfüllbehälter eine Abluftabsaugung und eine Vakuumabsaugung angeschlossen sind.

Vorteilhafte Verwendungen zum Recycling ergeben sich aus den Ansprüchen 15 bis 21.

Mit der Erfindung ist es möglich, alle Aggregatzustände der Materialien zu erreichen, das heißt man könnte beispielsweise Kunstoffolien oder Kunststoffschäume so lange in der Maschine bewegen, bis sie sich so stark erhitzt haben, daß sie sich verflüssigen und dann durch eine dafür vorgesehene Austrittsöffnung ausgebracht werden können.

Ebenso ist es möglich, auch bestimmte Vergasungsprozesse in der Maschine zu erreichen. Durch die ausgewählten Siebeinsätze für eine weitere Auswurföffnung läßt sich die Vorrichtung an das zu verarbeitende Material anpassen, insbesondere auch an das gewünschte Austrittsmaterial bzw. dessen Größe und den Aufschlußgrad.

Mit der Maschine lassen sich jede Art von Stoffen zerkleinern wie beispielsweise Schlacke, Schaumstoffe, Styropor, Styrodur, Teppichböden jeglicher Ausführung, Ton, Gips, Kork, Spanplatten auch mit Verunreinigungen, wie z.B. Beton, Verputzreste, Nägeln, Holz in verschiedenen Stückgrößen. Gemüseabfall von Großmärkten, auch mit Holz etc. verunreinigt. Lebensmittel, z.B. Hülsenfrüchte, Obst, Getreide usw.

So ist es beispielsweise auch möglich, Kupferkabel zu verarbeiten, das einen sehr komplizierten und materialdifferenzierten Aufbau aufweist, wie beispielweise Telekommunikationserdkabel mit einem Bleimantel oder mit Stahlgeflechtschutzisolierung und mit fettgetränkten Einzeladern. Es können auch weitere Kabeltypen verarbeitet werden, wie beispielsweise Erdkabel mit Bleiummantelung, fettgetränkt, Kabel mit Blei- und Stahlgewebeummantelung, inclusive Kunststoffzwischenlagen oder Textilgewebezwischenlagen mit und ohne Fettzusätzen oder Kabel mit eingearbeitetem Tragseil aus Aluminium oder Stahlseilgewebe. In der Vorrichtung wird der Materialverbund getrennt und in die einzelnen Bestandteile, wie zum Beispiel Blei, FE-Metalle und Kupfer sowie Isolationsbestandteile aus Kunststoff aufgeteilt und liegt in der Schüttung lose vor.

Es ist auch möglich, einen differenzierten Austrag mit der Vorrichtung zu erreichen, so daß die zerkleinerten Teile kleine Kupferlitzen sind, die durch dafür vorgesehene Austrittsöffnungen an den Sieben nach außen gelangen können. Alle anderen Materialien, wenn sie sich nicht so stark zerkleinern lassen, bleiben in der Vorrichtung und können dann beispielsweise über die erste Auswurföffnung ausgetragen werden oder über eine separate Schwer- oder Großmetallklappe unterhalb des Rotors nach außen gebracht werden.

Die Maschine kann auch zusätzlich beheizt oder durch Reibungswärme so stark erhitzt werden, daß bestimmte Bestandteile des Verarbeitungsmaterials, wie zum Beispiel PE oder PP, angranulieren oder so weich werden, daß sie durch entsprechend dimensionierte, enge Spalte hindurchbeschleunigt werden oder in Form einer pasteusen oder fluidähnlichen Masse durch dafür vorgesehene spezielle Öffnungen der Maschine entweichen. Der Behälter der Maschine kann auch gekühlt werden, um eine bestimmte Sprödigkeit des Materials zu erzielen und damit auch den Bemahlungsgrad zu beeinflussen.

Durch die weiterhin bestehende Möglichkeit der stufenlosen Rotorhöhenverstellung während des Betriebes läßt sich die Wirbelsenke an den Prallelementen formen, das heißt das Material steigt durch die Zentrifugalkraft an der Außenwand hoch und fällt im Inneren, also gegen die Mitte zu wieder nach unten. So entsteht eine Kreislauf, der von der Rotormitte oder etwas außerhalb der Mitte zur Wand nach oben läuft und dann wieder zurück zur Mitte. Mit dieser Höhenverstellung läßt sich die Vorrichtung an die unterschiedlichen Schüttgewichte der zu verarbeitenden Materialien optimal anpassen.

Die Erfindung wird in der nachfolgenden Beschreibung anhand von in den Zeichnungen dargestellten Ausführungsbeispielen näher erläutert.

Es zeigen,
- Fig. 1: einen Längsschnitt durch den Prallreaktor nach der Erfindung,
- Fig. 2: eine Draufsicht auf den Prallreaktor gemäß Fig. 1,
- Fig. 3: eine Draufsicht auf den Rotor mit den Prallelementen, in einer Teilansicht,
- Fig. 4: eine vergrößerte Ansicht der Vorrichtung im Einfüllbehälterbereich,
- Fig. 5: eine Ansicht eines Abdeckbleches für die weitere Auswurföffnung gemäß einer ersten Ausführungsform,
- Fig. 6: einen Schnitt nach der Linie A - A in Fig. 5,
- Fig. 7: einen Schnitt entsprechend Fig. 6 mit negativ angeordneten Schlitzen,
- Fig. 8: einen Schnitt gemäß Fig. 6 mit neutral angeordneten Schlitzen,
- Fig. 9: eine Ansicht des Abdeckbleches mit Schlitzen in verschiedenen Winkelstellungen,
- Fig. 10: eine Ansicht der Vorrichtung mit einer Darstellung der Schlitzposition im Verhältnis zu den Prallelementen und dem Prallreaktorboden,
- Fig. 11: eine weitere Ausführungsform der Vorrichtung mit einer anderen Ausgestaltung des Reaktorbodens und Anordnung des Auswurföffnung,
- Fig. 12: eine weitere Ausgestaltung der Vorrichtung für die Materialaustragung im Aufriß,
- Fig. 13: einen Grudriß von Fig. 12, halbseitig dargestellt,
- Fig. 14: eine weitere Ausführungsform der Vorrichtung in einer Draufsicht in Verbindung mit Scherleisten,
- Fig. 15: eine Teilansicht der Vorrichtung mit einem erhöhten Prallelement und verbreiterter Scherleiste,
- Fig. 16: eine weitere Ausgestaltung der Vorrichtung mit oberhalb und unterhalb der Prallelemente angeordneten Scherleisten,
- Fig. 17: eine Ansicht des Außenbehälters mit verschiedenen Scher- und Pralleisten in einer Draufsicht und
- Fig. 18: den Behälter im Aufriß mit verschieden geneigten Pralleisten.

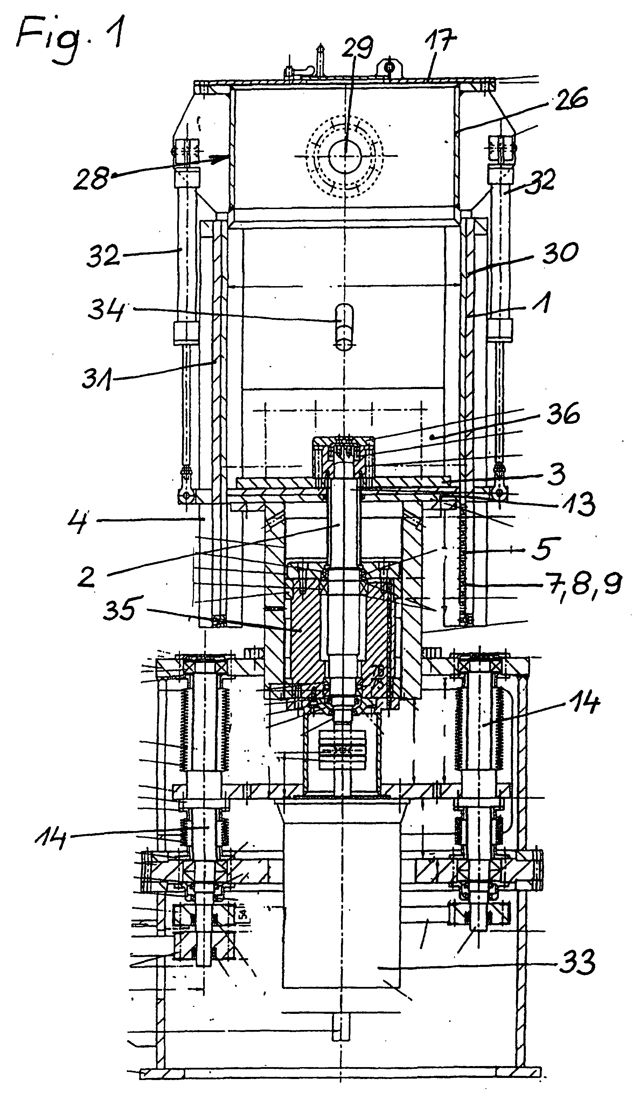

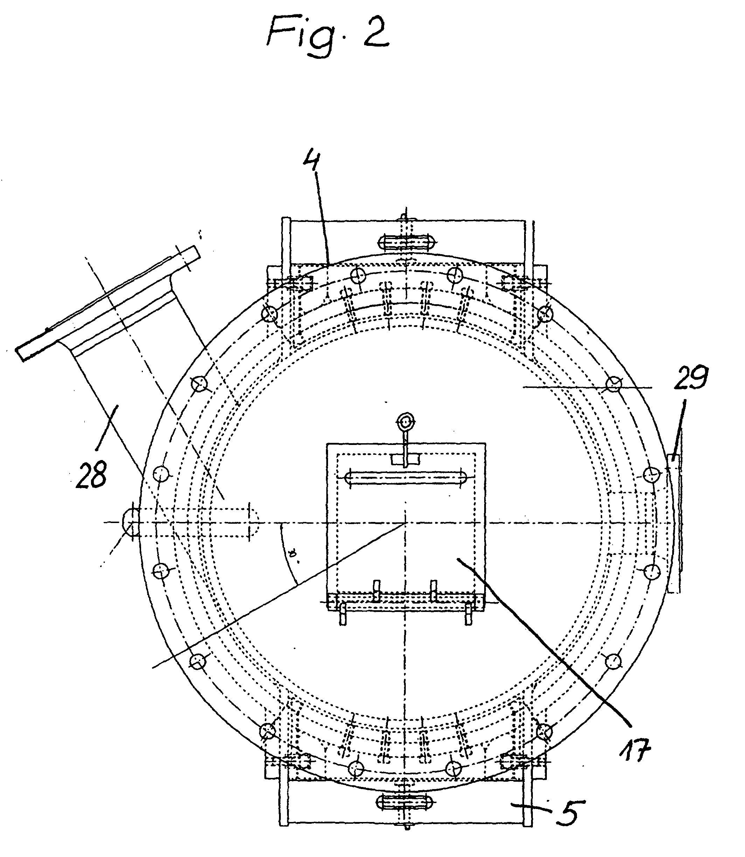

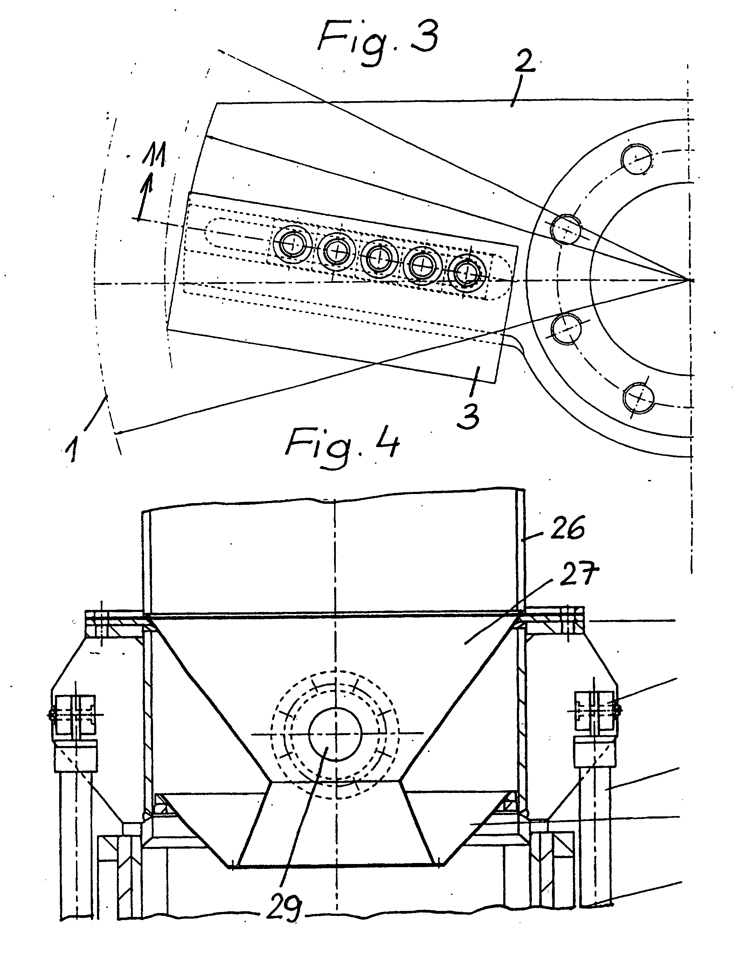

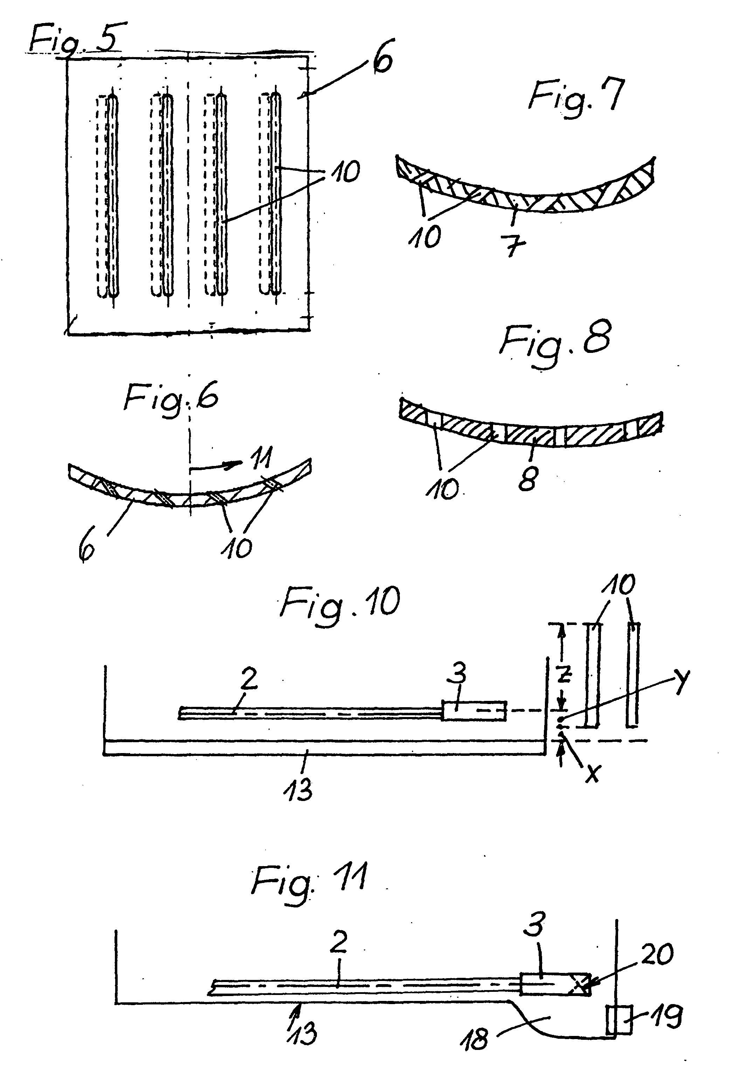

Der in den Fig. 1 und 2 dargestellte Prallreaktor besitzt einen zylindrischen Mantel 1, in dem ein Rotor 2 mit Prallelementen 3, angetrieben von einem Motor 33 das über einen Einfüllbehälter 26 eingefüllte Material zerkleinert. Der Mantel 1 ist mit einer ersten Auswurföffnung 4 versehen, wobei sich bei dem gezeigten Ausführungsbeispiel in etwas gegenüberliegend eine weitere Auswurföffnung 5 befindet, die mit Hilfe von geschlitzten Abdeckblechen (Fig. 5 bis 9) oder gelochten Abdeckblechen abgedeckt werden kann. Diese Abdeckbleche 7, 8, 9 werden mit Hilfe eines seitlich angeordneten Schiebers 30 und einem Hydraulikzylinder 32 jeweils in die entsprechende Position gebracht. Entsprechend läßt sich auf der anderen Seite die Auswurföffnung 4 mit Hilfe eines Schiebers 31 verschließen bzw. öffnen. Oberhalb des Rotors 2 befindet sich ein Wassereinspritzstutzen 34 und im Bereich des Einfüllbehälters 26 mit der Einfüllöffnung 17 eine Abluftabsaugung 28, trichterförmige Einbauten 27 (Fig. 4) und eine Vakuumabsaugung 29.

Die Vorrichtung hat an ihrem oberen Ende, das heißt im Bereich des Einfüllbehälters 26 einen Absaugstutzen 28, um zum Beispiel feuchte Holzmaterialien, die in der Maschine zerkleinert werden, auch durch Absaugung des entstehenden Wasserdampfes auszutrocknen. Bei diesem Betriebszustand werden zunächst beide Schieberöffnungen 4, 5 im geschlossenen Zustand gehalten und erst wenn ein Dampfsensor meldet, daß der gewünschte Trocknungsgrad erreicht ist, dann kann entweder die Auswurföffnung 4 oder die Auswurföffnung 5 für einen differenzierten Austrag geöffnet werden. Die trichterförmigen Einbauten 27 verhindern einen Staubaustrag.

Grundsätzlich ist ein Feuchtigkeitsentzug aus dem zu verarbeitenden Material, ohne daß dieses plastifiziert wird, bei bestimmten Anwendungsfällen von Vorteil. Dies kann durch verschiedene Techniken im Bereich der beiden Schieberöffnungen 4, 5 verwirklicht werden.
a) Die mit einem Sieb als Abdeckblech 6, 7, 8, 9 verschließbare Auswurföffnung 5 wird von außen mit einer glatten, der Siebgeometrie angepaßten Verschlußklappe verschlossen.
b) Das Sieb 6, 7, 8, 9 wird mit einer glatten Verschlußklappe von innen, welche vertikal oder horizontal verschoben wird, verschlossen, wodurch ein Zusetzen der Sieböffnungen während des Trocknungsprozesses verhindert wird.
c) Das Sieb 6, 7, 8, 9 wird durch eine Siebverschlußklappe von außen verschlossen, die erhabene Geometrien, wie z. B. Stege oder Stifte aufweist, die beim Verschließen der Siebfläche in die Sieböffnungsspalte eindringen und dadurch ein Zusetzen der Siebe verhindern.
d) Das Sieb 6, 7, 8, 9 wird durch eine Schiebesiebverschlußklappe bzw. einen Siebverschlußschieber, verschlossen, der vertikal oder horizontal verschoben wird, das heißt der Schieber hat zwei Zonen, nämlich eine geschlossene Zone und eine Siebzone.

Während des Trocknungsprozesses ist die verschlossene Zone im Prallreaktorbereich angeordnet. Ist der Trocknungsprozeß abgeschlossen, wird der Schieber nach oben bewegt, so daß dann die Siebfläche im Prallreaktorbehälterbereich positioniert ist und somit das zerkleinerte und getrocknete Material den Prallreaktor verlassen kann.

Der Zeitpunkt, bei dem das Material getrocknet ist und/oder genügend zerkleinert und/oder die Materialverbunde genügend getrennt sind, kann durch Referenzversuche in Form von Verweildauer oder entsprechend geartete Feuchtefühler, die im Prallreaktorbehälterraum angeordnet sein können, ermittelt werden.

Der Vorteil den gewünschten Feuchtegehalt durch einen Sensor/Fühler zu ermitteln liegt darin, daß Materialien unterschiedlicher Feuchte immer mit einer gleichbleibenden Restfeuchte vom Prallreaktor erzeugt werden können.

Der Verfahrensablauf zur Trocknung ergibt sich wie folgt. Der Prallreaktor ist im Materialaustrittsbereich, das heißt an den Auswurföffnungen 4, 5 komplett verschlossen und wird mit einer bestimmten Menge Material gefüllt. Je nach Material und Aufgabenstellung wird die Materialmenge durch den Belastungszustand des Antriebsmotors oder volumetrisch oder gravimetrisch über eine Bandwaage, ein Wiegeband und dergleichen ermittelt. Die geeignete Menge wird in den Prallreaktor eingefahren, wobei der Rotor ständig dreht, das Material zerkleinert, Materialverbunde löst, heftig durchmischt und einhergehend mit der steigenden Temperatur die Feuchtigkeit, die nicht nur aus Wasser, sondern auch anderen flüssigen Stoffen bestehen kann, ausgetrieben und durch geeignete Abluftführungsgeometrien mittels im Reaktor entstehenden Unterdrucks, entzogen werden kann. Zusätzlich besteht auch die Möglichkeit, den Materialien eventuell anhaftenden Staub oder Leichtmaterialien durch diese Ablufttechnik zu entziehen.

Ist dann die gewünschte Trockenheit oder Staublosigkeit erreicht, kann die Sieböffnung 5 freigegeben werden und/oder die freie Auswurfklappe 4 geöffnet werden.
Durch diese Technik können verfahrenstechnische Schritte, wie zum Beispiel die Trocknung oder die Entstaubung oder der Entzug von anderen unerwünschten Stoffen in zusätzlichen und weiteren Vorrichtungen und Anlagen eingespart werden. Durch Beheizen oder Kühlen des Prallreaktors lassen sich diese Prozesse optimieren.

Der weitere Anschluß mit der Vakuumabsaugung 29 im oberen Bereich dient dazu, bei bestimmten Materialien und bestimmten Zwecken das Maschineninnere unter einem leichten Vakuum zu halten, ggf. auch unter einem Überdruck.

Der Rotor 2 läßt sich mit Hilfe von seitlich angeordneten Gewindespindeln 14 stufenlos in der Höhe verstellen, wobei das gesamte Antriebsaggregat zusammen mit dem Antriebsmotor 33 und dem Lagergehäuse 35 für die Lagerung des Rotors 2 in der Höhe verschoben wird. Damit läßt sich der Rotor 2 während des Arbeitsprozesses und damit der Spalt zwischen dem Rotor 2 und dem Prallreaktorboden und die Arbeitshöhe der Prallelemente 3 in der Höhe verändern.

Vor die weitere Auswurföffnung 5 können verschiedene Abdeckbleche 6 gebracht werden. Eine solche erste Ausführungsform ist in den Fig. 5 und 6 dargestellt, wobei in dem Abdeckblech 6 mehrere vertikale und parallel zueinander stehende Schlitze 10 angeordnet sind. Diese Schlitze 10 können im Schnitt gesehen in einem bestimmten Winkel zum Rotor stehen, wobei zum Beispiel die Schlitze 10 in den Figuren 5 und 6 einen positiven Winkel zur Laufrichtung 11 des Rotors 5 einnehmen, das heißt es wird dem auszutretenden Material der Austritt aus der Maschine erleichtert. Bei der Ausführungsform gemäß Fig. 7 bilden die Schlitze 10 einen negativen Schlitzwinkel, das heißt der Austritt des Materials wird erschwert und bei der Ausführungsform gemäß Fig. 8 sind die Schlitze 10 senkrecht zur Laufrichtung 11 ausgerichtet. Dadurch kann man Materialien mit unterschiedlichen spezifischen Gewichten oder auch Raumgewichten bei Schäumen das Ausdringen aus der Maschine erschweren oder erleichtern und dadurch die gewünschte Materialform bzw. Materialzustand des zu verarbeiteten Materials erreichen.

Anstelle einer solchen Schlitzbildung können die Abdeckbleche 6 auch runde Löcher aufweisen, die dann entsprechend ausgerichtet sein können. Solche runde Löcher kann man zum Beispiel dann wählen, wenn Kupferlitzen oder generell Kabelabfälle verarbeitet werden. Durch die Veränderung des Winkels der Löcher kann auch bestimmt werden, wie stark verkugelt oder zerkleinert die Kupferteile sein müssen, bevor sie durch die Strömung und Prallwinkelverhältnisse in der Lage sind den Prallreaktorraum 36 der Vorrichtung zu verlassen.

Ein weiterer Parameter ist die Schlitzbreite, die zum Beispiel in einen Bereich von 0,05 mm bis etwa 200 mm sein kann und von dem zu zerkleinernden Material und der Maschinengröße abhängig ist. Entsprechend kann auch der Lochdurchmesser bei Abdeckblechen in Rundlochgestaltung sein.

Ein weiteres Verarbeitungsbeispiel bei einer Schlitzkonfiguration ergibt sich bei einem Gemisch aus Schaumstoffen, Styropor, Kunststoffen, auch verunreinigt mit anderen Dingen. Durch den Rotor 2 mit den Prallelementen 3 wird das Material zerkleinert und das Material, das klein genug ist, um durch die Schlitze austreten zu können, wird ausgetragen. Hier würde man ein Lochaustrittsmuster verwenden, da die Schaumstoffmaterialien, die eine sehr unterschiedliche Größe haben können, einwandfrei in der gewünschten Korngröße ausgetragen werden.

Ein weiteres Verarbeitungsbeispiel ergibt sich bei der Verarbeitung von Holz. Es kann sich entweder um vorgebrochenes Holz aus schweren Schreddermaschinen oder auch um Holzmaterialien, die stark verunreinigt sind, zum Beispiel durch Betonreste bei Schalmaterialien oder Nägel oder andere Verunreinigungen, handeln. Die Maschine arbeitet mit keinen engen Spalten und kann durch die Metalle oder Gesteinsmaterialien nicht beschädigt werden.

Ein weiteres Verarbeitungsbeispiel für die Vorrichtung und den selektierten Auswurf ist Elektronikschrott in den verschiedensten Varianten. Insbesondere lassen sich Kleingeräte sehr gut recyceln, zum Beispiel Mixer, Küchenmaschinen, elektrische Zahnbürsten, Kaffeemaschinen, Küchenmaschinen oder dergleichen. Bei Prallreaktoren entsprechender Größe wäre auch das Verarbeiten von ganzen Kühlschränken vorstellbar.

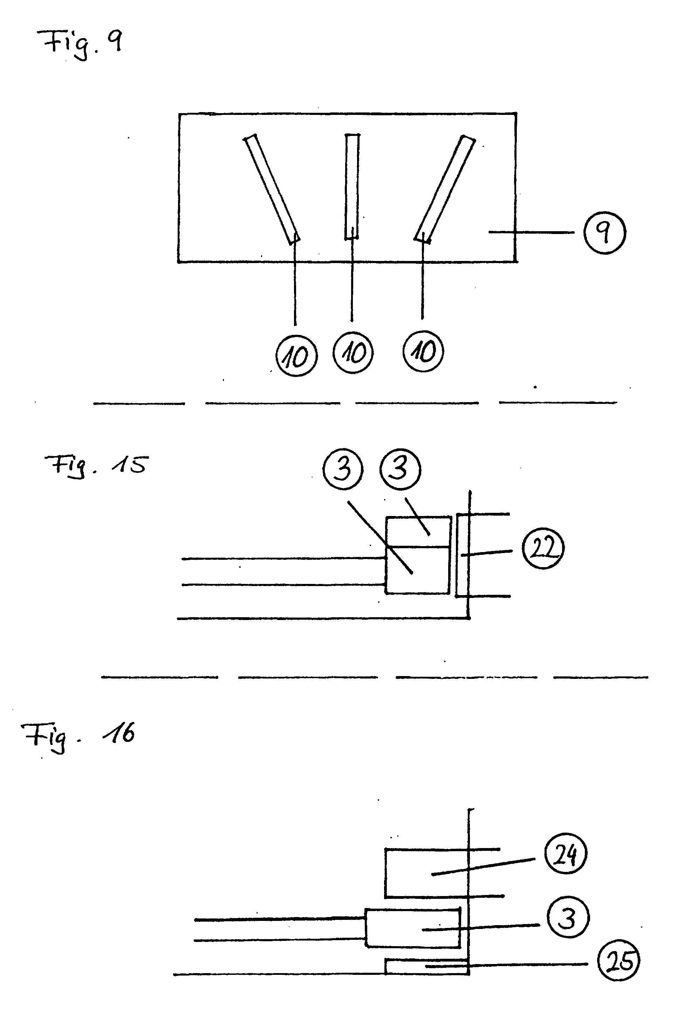

Wie in Fig. 9 dargestellt können die Schlitze 10 auch zur Laufrichtung 11 geneigt sein, das heißt nicht die in Fig. 5 gezeigte parallele Position einnehmen. Zusätzlich können die Schlitze gemäß den Fig. 6 bis 8 angeordnet sein und die Breite entsprechend variieren.

Die Fig. 10 zeigt eine weitere Ausführungsform für die Anordnung der Schlitze 10, wobei die Schlitze 10 im Schlitzfenster verschiedene Positionen zum Prallreaktorboden 13 entsprechend einem Abstand x, von Prallelementmitte nach unten, mit y gekennzeichnet und von Prallelementmitte bis zum oberen Ende des Schlitzes 10, mit z bezeichnet, aufweisen.

Durch die unterschiedliche Konfiguration und Stellungen der Schlitze 10 kann darauf Einfluß genommen werden, wann und in welchem Zustand das Material den Prallreaktor verläßt. Am besten läßt sich die geeignete Konfiguration durch Testversuche ermitteln. Die Schlitze können darüber hinaus auch eine trapezförmige oder dreieckförmige Form aufweisen, um bestimmte Effekte zu erreichen.

Bei den bisher beschriebenen Ausführungsformen erstreckt sich die weitere Auswurföffnung 5 nur über einen bestimmten Umfangsbereich des Mantels 1. Bei bestimmten Materialien kann es jedoch vorteilhaft sein, solche Siebaustragsflächen über den gesamten Umfang des Prallreaktors und in einer bestimmten Höhe zum Reaktorboden 13 vorzusehen, so daß das Material möglichst rasch nach Erreichen der gewünschten Größe oder des gewünschten Zustandes den Reaktor wieder verlassen kann.

Weiterhin kann sich die Siebausbildung nur über einen bestimmten Teilwinkel als offenes Auswurffenster erstrecken und es können verschiedene Siebgrößen in bestimmten Zonen verwendet werden. So kann zum Beispiel eine bestimmte Zone mit 5 mm Lochdurchmesser oder Längssieb ausgestattet sein, positiv, neutral oder negativ gewinkelt, eine weitere Zone mit 8 mm oder eine andere Zone mit 15 mm.

Die Fig. 11 zeigt eine weitere Ausführungsform, bei der im Prallreaktorboden 13 im äußeren Bereich eine Vertiefung 18 vorgesehen ist, in der sich zum Beispiel grobe oder schwere Materialien ablagern können. Diesen Effekt kann man dadurch unterstützen, daß die Prallelemente 3 eine bestimmte Form aufweisen, wobei auch dann in diesem Bereich eine Auswurföffnung 19 vorgesehen ist. Oberhalb der Auswurföffnung 19 können noch weitere Auswurföffnungen vorgesehen sein, um bestimmte Materialien und Materialgemische auszusondern bzw. abzusaugen. Weiterhin kann man den Prallelementen 3 an ihren Prallkanten 20 eine entsprechende Form geben, um das Bilden solcher Austragszonen zu fördern.

Gemäß der in den Figuren 12 und 13 gezeigten Ausführungsform befindet sich im Bereich der Auswurföffnungen 4, 5 ein Luftabsaugring 15, der an ein Gebläse 16 angeschlossen ist. Dieser Luftabsaugring 15 kann auch in Segmentbauweise ausgeführt sein. So können beispielsweise Holz oder auch Kupfer oder andere Bestandteile nach dem Siebaustritt entweder über eine Rutsche nach unten gleiten oder mit dem Sauggebläse 16 abgezogen werden. Die Luftzufuhr kann dann über die Einfüllöffnung 17 erfolgen. Dadurch wird auch eine Staubentwicklung unterbunden.

Wie Fig. 14 zeigt, kann an der Innenseite 21 des Mantels eine Scherleiste 22 vorgesehen sein, wobei der Rotor 2 bzw. die Prallelemente 3 in einem einstellbaren Abstand an der Scherleiste 22 vorbeilaufen. Diese Scherleiste 22 ist mittels einer Federlagerung 23 oder Hydraulik mit definiertem Druck so an der Maschine angebracht, daß bei Eintritt eines Blockierzustandes die Scherleiste 22 nach außen ausweicht und somit die Vorrichtung geschützt ist. Mit einer Hydraulik kann auch die Eintauchtiefe der Scherleiste 22 verändert werden. Die Scherleiste 22 kann darüber hinaus einen entsprechenden Winkel 37 zur Laufrichtung aufweisen und sich auch über eine entsprechende Einbauhöhe innerhalb des Prallreaktorraumes 36, jedoch immer im Bewegungsbereich der Prallelemente 3, erstrecken.

So zeigt die Fig. 15 eine solche in der Höhe vergrößerte Scherleiste 22 bei entsprechend erhöhten Prallelementen 3. Gemäß der Ausführungsform nach Fig. 16 befinden sich zwei solcher Scher- oder Pralleisten, eine Scherleiste 25 unterhalb des Prallelementes 3 und eine weitere Scherleiste 24 oberhalb des Prallelementes 3.

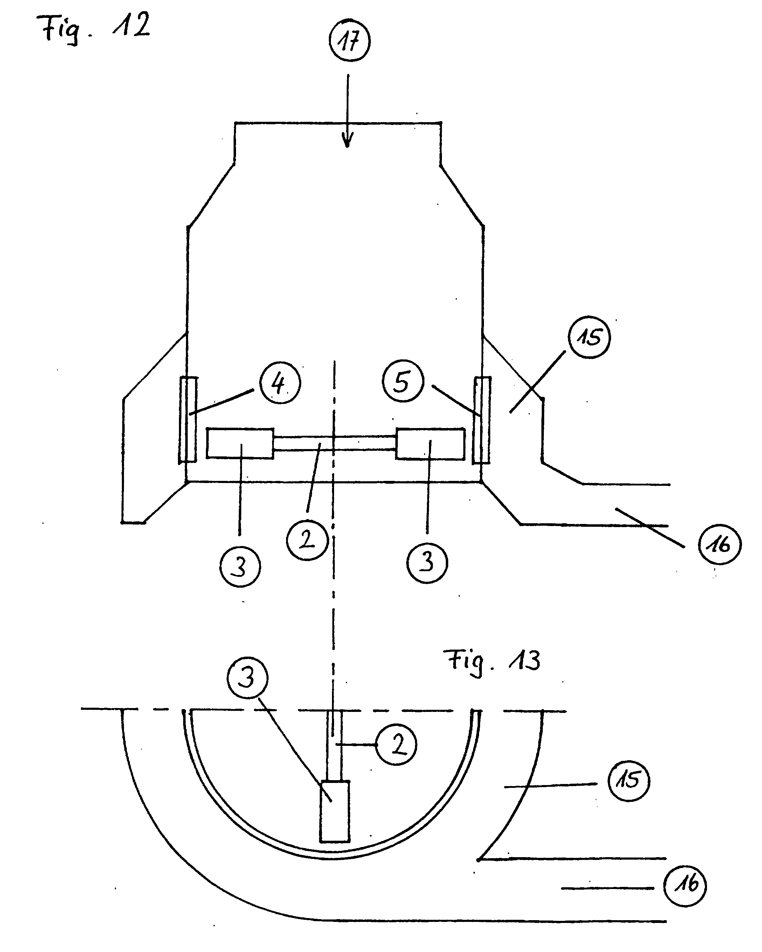

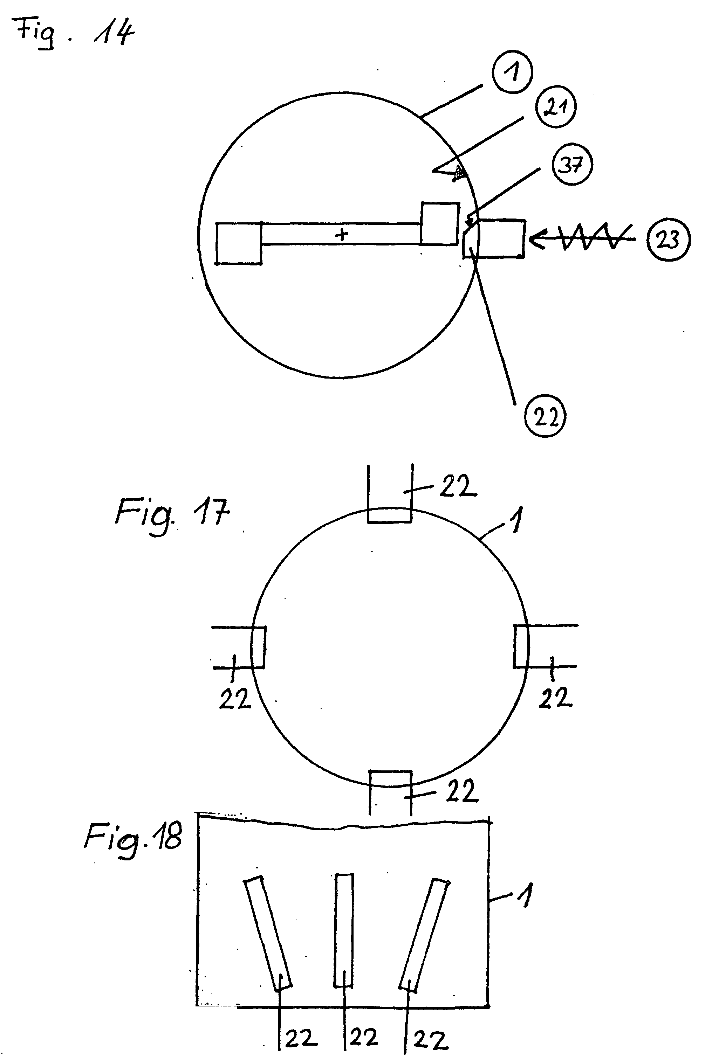

Bei der in Fig. 17 gezeigten Ausführungsform sind am Behälterumfang vier Prall- oder Scherleisten 22 angeordnet. Diese Scherleisten 22 bewirken, daß beispielsweise bei Verbundstoffen wie Kabel, Elektronikschrott, Kupferrohre mit aufgeschäumter Wärmeisolation oder dergleichen einen besonders wirkungsvollen Aufschluß erfahren können. Wie in Fig. 18 gezeigt, können diese Scher- oder Pralleisten 22 zur Achse des Behältermantels 1 geneigt oder in Richtung der Behälterachse verlaufen, wodurch das zu zerkleinernde Material eine gezielte Bewegungsrichtung erfährt und damit besondere Verfahrensvorteile erzielbar sind.

## Patentansprüche

1. Vorrichtung zum Verarbeiten von Bauteilen aus Mischstoffen mit Bestandteilen aus Kunststoff, Metallteile, Glas, Gummi, Holz oder Faserstoffe, mit einem Prallreaktor, der einen zylindrischen Mantel (1) aufweist, in dem ein Rotor (2) mit am Umfang angeordneten Prallelementen (3) vorgesehen ist, und einer im Bereich des Rotors (2) im Mantel (1) angebrachten ersten Auswurföffnung (4), **dadurch gekennzeichnet, dass** die erste Auswurföffnung (4) durch einen Schieber (31) verschließbar ist, und dass am Umfang des Mantels (1) versetzt eine zweite Auswurföffnung (5) angeordnet ist, die mit Hilfe von geschlitzten und/oder gelochten Abdeckblechen (6, 7, 8, 9) abgedeckt werden kann.

2. Vorrichtung nach Anspruch 1, **dadurch gekennzeichnet, daß** die zweite Auswurföffnung (5) durch eine Verschlussklappe verschließbar ist.

3. Vorrichtung nach Anspruch 1 und 2, **dadurch gekennzeichnet, daß** die Schlitze (10) und/oder die Lochung zur tangentialen Laufrichtung (11) des Rotors (2) in Laufrichtung (11), gegen die Laufrichtung (11) und senkrecht zur Laufrichtung (11) angeordnet sind.

4. Vorrichtung nach Anspruch 1 bis 3 **dadurch gekennzeichnet, daß** der Abstand (x) der Schlitze (10) und/oder der Löcher vom Prallreaktorboden (13) einstellbar ist.

5. Vorrichtung nach Anspruch 1 bis 4 **dadurch gekennzeichnet, daß** der Rotor (2) in der Höhe stufenlos verstellbar ist.

6. Vorrichtung nach Anspruch 5, **dadurch gekennzeichnet, daß** der Rotor (2) an seitlichen Gewindespindeln (14) abgestützt ist.

7. Vorrichtung nach einem der Ansprüche 1 bis 6, **dadurch gekennzeichnet, daß** sich die geschlitzten und/oder gelochten Abdeckbleche (6,7,8,9) über den Umfang des Mantels (1) erstrecken.

8. Vorrichtung nach Anspruch 1 bis 7, **dadurch gekennzeichnet, daß** der die Auswurföffnungen (4,5) aufweisende Bereich des Mantels (1) von einem Luftabsaugring (15) umgeben ist, der an ein Gebläse (16) angeschlossen ist.

9. Vorrichtung nach Anspruch 1 bis 8, **dadurch gekennzeichnet, daß** ' der Prallreaktorboden (13) im Randbereich eine Vertiefung (18) aufweist und sich im Bereich der Vertiefung (18) eine weitere Auswurföffnung (19) befindet.

10. Vorrichtung nach Anspruch 9 **dadurch gekennzeichnet, daß** die Prallkante (20) der Prallelemente (3) in oder entgegen der Tangente zur Laufrichtung (11) ausgerichtet ist.

11. Vorrichtung nach einem der Ansprüche 1 bis 10, **dadurch gekennzeichnet, daß** eine an der Innenseite (21) des zylindrischen Mantels (1) gegenüber dem Rotor (2) angebrachte Scherleiste (22) mittels Federn (23) oder gesteuertem Hydraulikdruck abgestützt ist.

12. Vorrichtung nach einem der Ansprüche 1 bis 11, **dadurch gekennzeichnet, daß** oberhalb und/oder unterhalb der Prallelemente (3) am Mantel (1) Scherleisten (24,25) angebracht sind, ggf. auch mit Feder- oder Hydrauliktechnik.

13. Vorrichtung nach einem der Ansprüche 1 bis 12, **dadurch gekennzeichnet, daß** oberhalb des Mantels (1) ein Einfüllbehälter (26) angeordnet ist, der mit trichterförmigen Einbauten (27) versehen ist.

14. Vorrichtung nach Anspruch 13, **dadurch gekennzeichnet, daß** an den Einfüllbehälter (26) eine Abluftabsaugung (28) und eine Vakuumabsaugung (29) angeschlossen sind.

15. Verwendung einer Vorrichtung nach den Ansprüchen 1 bis 14, zum Recycling von Elektrokabeln wie Kupferkabeln, Telekommunikationskabeln mit Bleimantel oder Stahlgeflechtsschutzisolierung, Erdkabel mit Bleiummantelung, fettgetränkt, Kunststoff- und Textilzwischenlagen oder Kabel mit Tragseilen aus Aluminium oder Stahlseil.

16. Verwendung einer Vorrichtung nach den Ansprüchen 1 bis 14 zum Recycling der verschiedensten Kunststoffe wie Folien, Schäume, Styrodur, Styropor oder dergleichen.

17. Verwendung einer Vorrichtung nach den Ansprüchen 1 bis 14 zum Recycling von Spanplatten oder Holzteilen, auch verunreinigt mit Verputz oder Betonresten oder Nägeln, oder anderen Verunreinigungen.

18. Verwendung einer Vorrichtung nach den Ansprüchen 1 bis 14 zum Recycling von Elektronikschrott, elektrischen Kleingeräten, Kühlschränke und dergleichen.

19. Verwendung einer Vorrichtung nach den Ansprüchen 1 bis 14 zum Recycling von Teppichböden jeglicher Ausführung, auch mit Verunreinigungen.

20. Verwendung einer Vorrichtung nach den Ansprüchen 1 bis 14 zum Recycling von Schlacke, Ton, Gips, Kork oder dergleichen.

21. Verwendung einer Vorrichtung nach den Ansprüchen 1 bis 14 zum Recycling von Schredderleichtfraktion, bestehend aus verschrotteten Kraftfahrzeugen mit Kunststoff-, Metall-, Textilund Gummibestandteilen.

## Claims

1. Device for processing constructional elements made of mixed materials with components made of plastics material, metal parts, glass, rubber, wood or fibrous materials, with an impact reactor comprising a cylindrical casing (1), in which a rotor (2) is provided with impact elements (3) arranged on the periphery, and a first ejection aperture (4) provided in the region of the rotor (2) in the casing (1), **characterised in that** the first ejection aperture (4) can be closed by a slide (31), and **in that** arranged offset on the periphery of the casing is the second ejection aperture (5) which can be covered with the aid of slotted and/or perforated covering plates (6, 7, 8, 9).

2. Device according to claim 1, **characterised in that** the second ejection aperture (5) can be closed by a closing shutter.

3. Device according to claim 1 and 2, **characterised in that** the slots (10) and/or the perforation for the tangential running direction (11) of the rotor (2) in the running direction (11) are arranged counter to the running direction (11) and perpendicular to the running direction (11).

4. Device according to claim 1 to 3, **characterised in that** the spacing (x) of the slots (10) and/or the holes of the impact reactor base (13) is adjustable.

5. Device according to claim 1 to 4, **characterised in that** the rotor (2) can be continuously height-adjusted.

6. Device according to claim 5, **characterised in that** the rotor (2) is supported on lateral threaded spindles (14).

7. Device according, to any one of claims 1 to 6, **characterised in that** the slotted and/or perforated covering plates (6, 7, 8, 9) extend over the periphery of the casing (1).

8. Device according to claim 1 to 7, **characterised in that** the region of the casing (1) comprising the ejection apertures (4, 5) is surrounded by an air extraction ring (15) attached to a fan (16).

9. Device according to claim 1 to 8, **characterised in that** the impact reactor base (13) comprises a recess (18) in the edge region and a further ejection aperture (19) is located in the region of the recess (18).

10. Device according to claim 9, **characterised in that** the impact edge (20) of the impact elements (3) is oriented in or counter to the tangent to the running direction (11).

11. Device according to any one of claims 1 to 10, **characterised in that** a shear strip (22) attached to the inside (21) of the cylindrical casing (1) opposing the rotor (2) is supported by means of springs (23) or controlled hydraulic pressure.

12. Device according to any one of claims 1 to 11, **characterised in that** shear strips (24, 25) are attached above and/or below the impact elements (3) on the casing (1), optionally also by spring or hydraulic technology.

13. Device according to any one of claims 1 to 12, **characterised in that** a filling container (26) provided with funnel-shaped inserts (27) is arranged above the casing (1).

14. Device according to claim 13, characterised -in that an exhaust air extractor (28) and a vacuum extractor (29) are attached to the filling container (26).

15. Use of a device according to claims 1 to 14 for recycling electric cables such as copper cables, telecommunications cables with lead casing or braided steel protective insulation, underground cables with lead sheathing, grease-impregnated, plastic and textile intermediate layers, or cables with bearer cables made of aluminium or steel cable.

16. Use of a device according to claims 1 to 14, for recycling the most varied plastics material such as films, foams, Styrodur®, expanded polystyrene or the like.

17. Use of a device according to claims 1 to 14, for recycling chipboards or wooden parts, even contaminated with plaster or concrete residues or nails, or other impurities.

18. Use of a device according to claims 1 to 14, for recycling electronic waste, small electric apparatus, refrigerators and the like.

19. Use of a device according to claims 1 to 14, for recycling carpet floorings of any design, even with impurities.

20. Use of a device according to claims 1 to 14, for recycling slag, clay, gypsum, cork or the like.

21. Use of a device according to claims 1 to 14, for recycling light shredder fraction, consisting of scrap vehicles with plastic, metal, textile and rubber components.

## Revendications

1. Dispositif pour traiter des éléments de matériaux de mélange avec des composants en matière plastique, éléments métalliques, verre, caoutchouc, bois, ou matières fibreuses, comprenant un réacteur à percussion qui présente une enveloppe cylindrique (1), dans laquelle est prévu un rotor (2) avec des éléments de percussion (3) disposés sur le pourtour, et une première ouverture d'éjection (4) placée dans l'enveloppe (1) dans la zone du rotor (2), **caractérisé en ce que** la première ouverture d'éjection (4) peut être fermée par un tiroir (31), et **en ce qu'**une seconde ouverture d'éjection (5), disposée en déport sur le pourtour de l'enveloppe (1), peut être recouverte à l'aide de tôles de couverture (6, 7, 8, 9) fendues et/ou perforées.

2. Dispositif suivant la revendication 1, **caractérisé en ce que** la seconde ouverture d'éjection (5) peut être fermée par un clapet.

3. Dispositif suivant les revendications 1 et 2, **caractérisé en ce que** la fente (10) et/ou la perforation est disposée par rapport au sens de rotation (11) tangentiel du rotor (2) dans le sens de rotation (11), en direction du sens de rotation (11) et perpendiculairement au sens de rotation (11).

4. Dispositif suivant les revendications 1 à 3, **caractérisé en ce que** la distance (x) des fentes (10) et/ou des trous est réglable par rapport au fond (13) du réacteur à percussion.

5. Dispositif suivant les revendications 1 à 4, **caractérisé en ce que** le rotor (2) est réglable en hauteur en continu.

6. Dispositif suivant la revendication 5, **caractérisé en ce que** le rotor (2) est supporté sur des broches filetées latérales (14).

7. Dispositif suivant l'une des revendications 1 à 6, **caractérisé en ce que** les tôles de couverture (6, 7, 8, 9) fendues et/ou perforées s'étendent sur le pourtour de l'enveloppe (1).

8. Dispositif suivant les revendications 1 à 7, **caractérisé en ce que** la zone de l'enveloppe (1), présentant les ouvertures d'éjection (4, 5), est entourée d'une couronne d'aspiration d'air (15), raccordée à un ventilateur (16).

9. Dispositif suivant les revendications 1 à 8, **caractérisé en ce que** le fond (13) du réacteur à percussion présente dans la zone de bordure une cavité (18), et une ouverture d'éjection supplémentaire (19) se situe dans la zone de la cavité (18).

10. Dispositif suivant la revendication 9, **caractérisé en ce que** l'arête (20) des éléments de percussion (3) est orientée dans ou contre la tangente au sens de rotation (11).

11. Dispositif suivant l'une des revendications 1 à 10, **caractérisé en ce qu'**une barre de cisaillement (22), montée sur le côté intérieur (21) de l'enveloppe cylindrique (1) en vis-à-vis du rotor (2), est supportée au moyen de ressorts (23) ou d'une pression hydraulique commandée.

12. Dispositif suivant l'une des revendications 1 à 11, **caractérisé en ce que** des barres de cisaillement (24, 25) sont montées sur l'enveloppe (1) au-dessus et/ou au-dessous des éléments de percussion (3), éventuellement également avec une technique de ressort ou hydraulique.

13. Dispositif suivant l'une des revendications 1 à 12, **caractérisé par** un réservoir de chargement (26), disposé au-dessus de l'enveloppe (1) et muni de chicanes (27) en forme d'entonnoir.

14. Dispositif suivant la revendication 13, **caractérisé en ce qu'**une aspiration d'air vicié (28) et une aspiration de vide (29) sont raccordées au réservoir de chargement (26).

15. Utilisation d'un dispositif suivant les revendications 1 à 14 pour le recyclage de câbles électriques, tels que câbles de cuivre, câbles de télécommunication avec gaine de plomb ou isolation de protection en treillis d'acier, câbles enterrés avec gainage de plomb, imprégnés de graisse, avec couches intermédiaires de matière plastique ou de textile, ou câbles avec filins porteurs en aluminium ou filin d'acier.

16. Utilisation d'un dispositif suivant les revendications 1 à 14 pour le recyclage de matières plastiques les plus diverses, telles que feuilles, mousses, Styrodur, Styropor, ou autres.

17. Utilisation d'un dispositif suivant les revendications 1 à 14 pour le recyclage de panneaux d'agglomérés ou de pièces de bois, également souillés par du crépi ou des résidus de béton ou clous, ou autres souillures.

18. Utilisation d'un dispositif suivant les revendications 1 à 14 pour le recyclage de grenailles électroniques, petits appareils électriques, réfrigérateurs et autres.

19. Utilisation d'un dispositif suivant les revendications 1 à 14 pour le recyclage de moquettes de toute sorte, également souillées.

20. Utilisation d'un dispositif suivant les revendications 1 à 14 pour le recyclage de laitier, argile, gypse, liège, ou autres.

21. Utilisation d'un dispositif suivant les revendications 1 à 14 pour le recyclage de fractions légères de déchiquetage, composées de véhicules automobiles mis à la ferraille avec des composants en matière plastique, métal, textile et caoutchouc.
